# EUROPEAN PATENT APPLICATION

(11) **EP 4 663 401 A1**
(43) Date of publication of application: **17.12.2025**
(21) Application number: 24189571.3
(22) Date of filing: 18.07.2024
(51) Int. Cl.: B32B 7/12, B32B 3/06, B32B 5/18, B32B 5/32, B32B 7/02, B32B 7/06, B32B 27/30

(54) **CONSTRUCTION BOARD COMPOSITES HAVING A PRESSURE-SENSITIVE ADHESIVE LAYER**

(30) Priority: 14.06.2024 US 202463660027 P
(71) Applicant: Holcim Technology Ltd, 6300 Zug (CH)
(72) Inventor: TANG, Jiansheng, Westfield, IN (US); SONG, Linyong, Fishers, IN (US); HOLTMAN, Mark, Fishers, IN (US)
(74) Representative: Kraus & Lederer PartGmbB

(57) **Abstract**

The invention relates to construction board composites that include a double-sided adhesive foam sheet. More specifically, described is a composite construction board comprising (a) construction board subcomponent; and (b) double-sided adhesive subcomponent. Also described are a roof system including the above composite construction board and a method of installing the composite construction board on a roof, the method comprising positioning the composite construction board on a roof surface, removing a release liner; and securing the composite construction board to the roof through a pressure-sensitive adhesive layer.

## Description

### FIELD OF THE INVENTION

Embodiments of the present invention are directed toward construction board composites that include a double-sided adhesive foam sheet.

### BACKGROUND OF THE INVENTION

Construction boards, particularly those employed in the construction industry, may include a foam layer and at least one facer. Often, the foam layer is sandwiched between two facers. The foam layer can include a closed cell polyurethane, closed cell polyurea, closed cell phenolic foam, or polyisocyanurate foam. Examples of construction boards include polyisocyanurate or polyurethane foam construction boards used in the roofing industry, particularly those used to cover low-sloped or flat roofs. These boards may include insulation boards that are used primarily as a roof insulation, or foam cover boards, which are typically higher in density and are primarily used to protect the underlying substrate (e.g., underlying insulation boards).

Construction boards, especially those used to cover a roof surface, are often applied by using mechanical fasteners. These fasteners typically include a plate that extends the surface area that is contacted between the fastener and the board. The fastener is an element (e.g. screw) that protrudes through the plate and can pierce the board and penetrate the underlying roof deck (e.g., a wood deck). Multiple fasteners and plates are employed for each board in predetermined patterns to counteract strong wind uplift forces that are often encountered on the roof.

While mechanical fasteners are commonly used and accepted by the industry, they have several drawbacks. First, installation using mechanical fasteners is labor intensive, especially in view of the number of fasteners and plates used for each board. This increases both installation time and costs. Also, the fasteners can act as "thermal bridges" and thereby transfer heat between the upper surface of the roof construction and the underlying roof deck (or even the interior of the structure).

In the alternative, construction boards have been applied to a roof surface using adhesives. For example, hot asphalt or polyurethane foam adhesives have been employed to secure insulation board by applying a layer of adhesive (e.g., a two-part polyurethane adhesive), and then subsequently positioning the construction boards over the adhesive layer. While this technique may be less labor intensive and provides adhesion over the entire surface of the board (i.e., it creates a fully-adhered system), drawbacks nonetheless exist. First, hot asphalt requires specialized training and equipment to install safely. Polyurethane foam adhesives are difficult to handle and can require trained applicators to apply. Also, these adhesives may contain volatile organics that are released into the environment during installation.

It has also been proposed to apply a layer of pressure-sensitive adhesive to a facer of a construction board to thereby provide a means of adhesively attaching construction boards to a roof surface. Conventional wisdom suggests applying the adhesive to the facer as a liquid, such as a solvent-borne composition or a hot melt, to thereby form a layer of pressure-sensitive adhesive. A release liner can then be applied over the pressure-sensitive layer to protect the adhesive layer during storage and shipment. The release liner can be removed during installation and the construction boards installed by using the so-called peel-and-stick method. Despite the apparent ease of this type of system, these composites have not gained widespread adoption in the industry.

### SUMMARY OF THE INVENTION

Embodiments of the present invention provide a composite construction board comprising (a) construction board subcomponent; and (b) double-sided adhesive subcomponent.

Other embodiments of the present invention provide a roof system including a composite construction board as provided above.

Still other embodiments of the present invention provide a method of installing a composite construction board on a roof, the method comprising positioning the composite construction board on a roof surface, removing the release liner; and securing the composite construction board to the roof through one of said pressure-sensitive adhesive layers.

### BRIEF DESCRIPTION OF THE DRAWINGS

Fig. 1 is a cross-sectional view of a composite construction board according to embodiments of the invention.
Fig. 2 is a cross-sectional view of a composite construction board including a construction board subcomponent with high-density and low-density layers according to embodiments of the invention.
Fig. 3 is a cross-sectional view of a composite construction board with high-density and low-density construction boards according to embodiments of the invention.
Fig. 4 is a cross-sectional view of a composite construction board with high-density and low-density construction boards according to embodiments of the invention.
Fig. 5 is a cross-sectional view of a composite construction board including a construction board subcomponent with offset foam layers according to embodiments of the invention.
Fig. 6 is a cross-sectional view of a composite construction board including a construction board subcomponent with offset foam layers according to embodiments of the invention.
Fig. 7 is a top elevational view of a composite construction board including a construction board subcomponent with offset foam layers according to embodiments of the invention
Fig. 8. is a cross-sectional view of a composite construction board including a construction board subcomponent with offset foam layers according to embodiments of the invention.

### DETAILED DESCRIPTION OF ILLUSTRATIVE EMBODIMENTS

### Introduction

Embodiments of the present invention are based, at least in part, on the discovery of composite construction boards that include a double-sided adhesive subcomponent with a foam carrier. The foam carrier advantageously allows the adhesive to securely mate the foam construction boards to a desired substrate even though many foam construction boards, especially polyisocyanurate foam boards, have irregular bonding surfaces and/or the substrates to which the construction boards are attached often have irregular surfaces. Thus, while the prior art contemplates composite construction boards with pressure-sensitive adhesive layers for peel-and-stick applications, it has been discovered that variability in the surface of the construction board and the substrates to which the boards are attached frustrate the adhesion offered by the layer of pressure-sensitive adhesive. The present invention, which provides a foam layer adj acent to the adhesive layer, advantageously overcomes problems associated with prior art composite construction boards. Indeed, it has advantageously been discovered that these construction boards, which can be used, for example, as insulation boards or cover boards on low-sloped or flat roofs, can be secured through the pressure-sensitive adhesive and withstand the requisite wind uplift forces at technologically useful high temperatures. Also, where the double-sided adhesive subcomponent is applied as a continuous layer over the surface of the construction boards, the use of the double-sided adhesive subcomponent advantageously provides a vapor barrier layer for the roof system.

### Composite Construction Board Overview

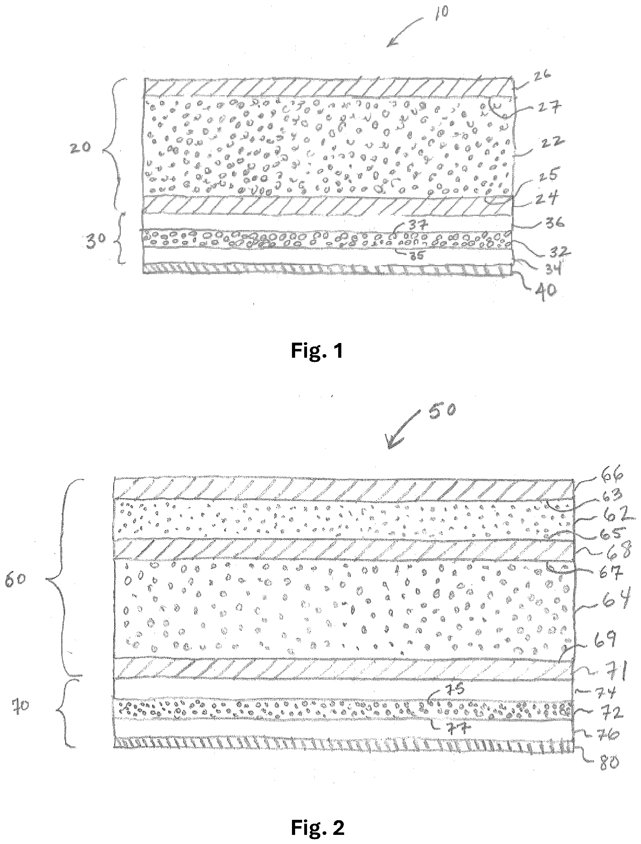

Construction boards of one or more embodiments of the present invention may be described with reference to Fig. 1, which shows composite construction board 10, which may simply be referred to as composite 10, including construction board subcomponent 20 and double-sided adhesive subcomponent 30. Construction board subcomponent 20, which may simply be referred to as construction board 20 or subcomponent 20, includes a rigid foam body 22, optional first facer 24 disposed on a first planar surface 25 of foam body 22, and optional second facer 26 disposed on a second planar surface 27 of foam body 22. As the skilled person will appreciate, first and second facers 24,26 may be integrally attached to foam body 22 by virtue of the foam being mated to the facers during formation of the foam.

Double-sided adhesive subcomponent 30, which may also be referred to as double-sided adhesive sheet 30, or adhesive subcomponent 30, includes a non-rigid foam layer 32, a first pressure-sensitive adhesive layer 34 disposed on a first planar surface 35 of non-rigid foam layer 32, and a second pressure-sensitive adhesive layer 36 disposed on a second planar surface 37 of non-rigid foam layer 32. A release member 40 is removably attached to first pressure-sensitive layer 34 opposite non-rigid foam layer 32. In one or more embodiments, first pressure-sensitive adhesive layer 34 is disposed on the entire first planar surface 35 of non-rigid foam layer 32. In one or more embodiments, second pressure-sensitive adhesive layer 36 is disposed on the entire second planar surface 37 of non-rigid foam layer 32.

As shown in Fig. 1, double-sided adhesive subcomponent 30 is mated to first facer 24 through second pressure-sensitive adhesive layer 36 where first facer 24 is present, or it will be appreciated that subcomponent 30 will be mated to first planar surface 25 of foam body 20 where first facer 24 is not present.

### Rigid Foam Body

In one or more embodiments, the rigid foam body (e.g. body 22), which may also be referred to as a rigid foam layer, includes a rigid closed-cell foam structure. In one or more embodiments, the rigid foam body may include a polyurethane, polyurea, phenolic, or polyisocyanurate foam.

In one or more embodiments, the foam body (e.g. body 22) may be characterized by a foam density (ASTM C303) that is less than 2.5 pounds per cubic foot (12 kg/m²), in other embodiments less than 2.0 pounds per cubic foot (9.8 kg/m²), in other embodiments less than 1.9 pounds per cubic foot (9.3 kg/m²), and still in other embodiments less than 1.8 pounds per cubic foot (8.8 kg/m²). In one or more embodiments, the foam body is characterized by having a density that is greater than 1.50 pounds per cubic foot (7.32 kg/m²), or in other embodiments, greater than 1.55 pounds per cubic foot (7.57 kg/m²). The foam bodies (as well as the corresponding construction boards) that are characterized by a foam density of less than 2.5 pounds per cubic foot may generally be referred to as low-density construction boards or insulation boards.

Where the density of the foam body is a polyisocyanurate foam with a density of less than 2.5 pounds per cubic foot, it may be advantageous for foam body to be characterized by having an index of at least 120, in other embodiments at least 150, in other embodiments at least 175, in other embodiments at least 200, and in other embodiments at least 225, as determined by PIR/PUR ratio as determined by IR spectroscopy using standard foams of known index (note that ratio of 3 PIR/PUR provides an ISO Index of 300). Foam construction boards having a foam layer of similar nature are described in U.S. Patent Nos. 7,838,568, 7,612,120, 7,387,753, 6,117,375, 6,044,604, 5,891,563, 5,573,092, and U.S. Publication Nos. 2004/0109983, 2003/0082365, 2003/0153656, 2003/0032351, and 2002/0013379, which are incorporated herein by reference.

In other embodiments, the foam body may be characterized by density that is greater than 2.5 pounds per cubic foot (12.2 kg/m²), as determined according to ASTM C303, in other embodiments the density is greater than 2.8 pounds per cubic foot (13.7 kg/m²), in other embodiments greater than 3.0 pounds per cubic foot (14.6 kg/m²), and still in other embodiments greater than 3.5 pounds per cubic foot (17.1 kg/m²). In one or more embodiments, the foam body may have a density of less than 20 pounds per cubic foot (97.6 kg/m²), in other embodiments less than 10 pounds per cubic foot (48.8 kg/m²), in other embodiments less than 6 pounds per cubic foot (29.3 kg/m²), in other embodiments less than 5.9 pounds per cubic foot (28.8 kg/m²), in other embodiments less than 5.8 pounds per cubic foot (28.3 kg/m²), in other embodiments less than 5.7 pounds per cubic foot (27.8 kg/m²), in other embodiments less than 5.6 pounds per cubic foot (27.3 kg/m²), and still in other embodiments less than 5.5 pounds per cubic foot (26.9 kg/m²). Foam construction boards having a foam layer of similar nature are described in U.S. Patent Nos. 8,453,390 and 7,972,688, which are incorporated herein by reference. The foam bodies (as well as the corresponding construction boards) that are characterized by a foam density of greater than 2.5 pounds per cubic foot may generally be referred to as high-density construction boards or cover boards.

Where the foam body is a polyisocyanurate foam body and has a density of greater than 2.5 pounds per cubic foot, it may be advantageous the foam body to be characterized by an ISO Index, as determined by PIR/PUR ratio as determined by IR spectroscopy using standard foams of known index (note that ratio of 3 PIR/PUR provides an ISO Index of 300) of at least 180, in other embodiments at least 200, in other embodiments at least 220, in other embodiments at least 270, in other embodiments at least 285, in other embodiments at least 300, in other embodiments at least 315, and in other embodiments at least 325. In these or other embodiments, the ISO Index may be less than 360, in other embodiments less than 350, in other embodiments less than 340, and in other embodiments less than 335.

### Facer

In one or more embodiments, facer 14 (and optionally optional facer 16) may include a variety of materials or compositions, many of which are known or conventional in the art. Useful facers include those comprising aluminum foil, cellulosic fibers, reinforced cellulosic fibers, craft paper, coated glass fiber mats, uncoated glass fiber mats, chopped glass, and combinations thereof. Useful facer materials are known as described in U.S. Patent Nos. 6,774,071, 6,355,701, RE 36674, 6,044,604, and 5,891,563, which are incorporated herein by reference.

The thickness of the facer material may vary; for example, it may be from about 0.01 to about 1.00 inches thick (0.025-2.54 cm) or in other embodiments from about 0.015 to about 0.050 inches thick (0.04-0.13 cm), or in other embodiments from about 0.015 to about 0.030 inches thick (0.04-0.07 cm). The facer materials can also include more robust or rigid materials such as fiber board, perlite board, or gypsum board. The thickness of the rigid facer can vary; for example, the thickness of the rigid facer can be from about 0.2 to about 1.5 inches (0.51-3.8 cm), or in other embodiments from about 0.25 to about 1.0 inches (0.64-2.54 cm).

In one or more embodiments, facers 14 and 16 are optional. Therefore, in one or more embodiments, construction board 10 may be facerless. The ability to produce facerless construction boards is known as described in U.S. Patent No. 6,117,375, which is incorporated herein by reference.

In other embodiments, the facers may be generally solid material such as wood, particle, or fiber board. In one or more embodiments, the facer is a wood board such as plywood, luan board, or oriented-strand board (OSB). In other embodiments, the facer board is a particle or fiber board such as fiber boards, masonite board, wall board, gypsum board, gypsum products such as DensDeck, perlite boards, and high density foam boards.

### Pressure Sensitive Adhesive Layer

As indicated above, the double-sided adhesive subcomponent includes a first and second pressure-sensitive adhesive layers disposed on opposite sides the non-rigid foam carrier layer. In one or more embodiments, the respective pressure-sensitive adhesive layers may have one or more of the same properties. For example, the respective pressure-sensitive adhesive layers may have the same thickness and/or may be compositionally the same. In other embodiments, the respective pressure-sensitive adhesive layers may have distinct characteristics.

In one or more embodiments, the pressure-sensitive adhesive layers of the adhesive sheet may be characterized by a thickness that is greater than 25, in other embodiments greater than 50, in other embodiments greater than 75, in other embodiments greater than 100, in other embodiments greater than 125, and in other embodiments greater than 150 µm. In these or other embodiments, the thickness of the pressure-sensitive adhesive layers of the adhesive sheet is less than 500, in other embodiments less than 400, in other embodiments less than 300, in other embodiments less than 200, and in other embodiments less than 150 µm. In one or more embodiments, the thickness of the pressure-sensitive adhesive layers of the adhesive sheet may be from about 25 to about 500 µm, in other embodiments from about 50 to about 400 µm, and in other embodiments from about 100 to about 300 µm.

In one or more embodiments, the pressure-sensitive adhesive layers include, as major polymeric component, a rubber such as ethylene-propylene-diene rubber, ethylene-propylene rubber, polychloroprene, and/or butyl rubber. In other embodiments, the pressure-sensitive adhesive layers include, as a major component, an acrylic resin or polyacrylate polymer. In these or other embodiments, the pressure-sensitive adhesive may include copolymers that include acrylic and/or acrylate units and optionally one or more functional units that can, upon a stimulus such as heat, crosslink the polymers. Exemplary pressure-sensitive adhesive compositions based upon rubbers are disclosed in U.S. Patent Nos. 9,296,927, 9,068,038, 8,347,932, and 5,859,114, which are incorporated herein by reference.

In one or more embodiments, the pressure-sensitive adhesive layer may be formed from a solvent-borne or water-borne composition that can be applied to the surface of the foam carrier layer or to a transfer film. As the skilled person appreciates, evaporation or removal of the solvent or water provides the adhesive layer. In one or more embodiments, heat or other energy is imparted to the adhesive layer during or after the evaporation process to thereby initiate crosslinking of the polymers within the adhesive layer.

In other embodiments, the pressure-sensitive adhesive layers are formed from a hot-melt pressure-sensitive adhesive composition that can be melt-extruded onto the surface of the foam carrier or a transfer film. Exemplary melt-extrudable (i.e. hot-melt) pressure-sensitive adhesives include compositions based upon acrylic polymers, polyacrylates, butyl rubber, ethylene vinyl acetate, natural rubber, nitrile rubber, silicone rubber, styrene block copolymers, ethylene-propylene-diene rubber, atactic polyalpha olefins, and/or vinyl ether polymers. In combination with these base polymers, the pressure-sensitive adhesive compositions may include a variety of complementary constituents such as, but not limited to, tackifying resins, waxes, antioxidants, and plasticizers. Pressure-sensitive adhesives that are useful in practicing the present invention are known in the art as described, for example, in U.S. Patent No. 8,968,853, which is incorporated herein by reference.

In particular embodiments, the adhesive layers include a cured, hot-melt pressure-sensitive adhesives. Cured pressure-sensitive adhesives that are useful in practicing the present invention are known in the art as described, for example, in WIPO Publication No. WO 2015/042258, WO 2017/165868, WO 2017/165870, and WO 2017/165871 which are incorporated herein by reference.

In one or more embodiments, the curable hot-melt adhesive that may be used for forming the cured pressure-sensitive adhesive layer may be an acrylic-based hot-melt adhesive. In one or more embodiments, the acrylic-based holt-melt adhesive is a polyacrylate such as a polyacrylate elastomer. The polyacrylates, which may also be referred to as acrylate-based polymers, may include two or more chemically distinct polyacrylates. In one or more embodiments, useful polyacrylates include one or more units defined by the formula: 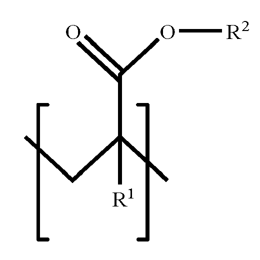 where each R¹ is individually hydrogen or a hydrocarbyl group and each R² is individually a hydrocarbyl group. In the case of a homopolymer, each R¹ and R², respectively, throughout the polymer are same in each unit. In the case of a copolymer, at least two different R¹ and/or two different R² are present in the polymer chain.

In one or more embodiments, hydrocarbyl groups include, for example, alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group containing in the range of from 1 carbon atom, or the appropriate minimum number of carbon atoms to form the group, up to about 20 carbon atoms. These hydrocarbyl groups may contain heteroatoms including, but not limited to, nitrogen, oxygen, boron, silicon, sulfur, and phosphorus atoms. In particular embodiments, each R² is an alkyl group having at least 4 carbon atoms. In particular embodiments, R¹ is hydrogen and R² is selected from the group consisting of butyl, 2-ethylhexyl, and mixtures thereof.

In one or more embodiments, the polyacrylate elastomers that are useful in preparing the adhesive layers may be characterized by a glass transition temperature (Tg) of less than 0 °C, in other embodiments less than -20 °C, in other embodiments less than -30 °C. In these or other embodiments, useful polyacrylates may be characterized by a Tg of from about -70 to about 0 °C, in other embodiments from about -50 to about -10 °C, and in other embodiments from about -40 to about -20 °C. In the context of the present invention, glass transition temperatures are determined according to ASTM E1356-08 by differential scanning calorimetry (DSC).

In one or more embodiments, the polyacrylate elastomers that are useful in preparing the adhesive layers may be characterized by a number average molecular weight of from about 100 to about 350 kg/mole, in other embodiments from about 150 to about 270 kg/mole, and in other embodiments from about 180 to about 250 kg/mole.

In one or more embodiments, the polyacrylate elastomers that are useful in preparing the adhesive layers may be characterized by a Brookfield viscosity at 150 °C of from about 20,000 to about 70,000 cps, in other embodiments from about 30,000 to about 60,000 cps, and in other embodiments from about 40,000 to about 50,000 cps.

Specific examples of polyacrylate elastomers that are useful in preparing the adhesive layers include poly(butylacrylate), and poly(2-ethylhexylacryalte). These polyacrylate elastomers may be formulated with photoinitiators, solvents, plasticizers, and resins such as natural and hydrocarbon resins. The skilled person can readily formulate a desirable coating composition. Useful coating compositions are disclosed, for example, in U.S. Patent Nos. 6,720,399, 6,753,079, 6,831,114, 6,881,442, and 6,887,917, which are incorporated herein by reference.

In other embodiments, the polyacrylate elastomers may include polymerized units that serve as photoinitiators. These units may derive from copolymerizable photoinitiators including acetophenone or benzophenone derivatives. These polyacrylate elastomers and the coating compositions formed therefrom are known as disclosed in U.S. Patent Nos 7,304,119 and 7,358,319, which are incorporated herein by reference.

Useful adhesive compositions are commercially available in the art. For example, useful adhesives include those available under the tradename acResin (BASF), those available under the tradename AroCure (Ashland Chemical), and NovaMeltRC (NovaMelt). In one or more embodiments, these hot-melt adhesives may be cured (i.e., crosslinked) by UV light.

In one or more embodiments, the adhesive layers substantially include a cured polyacrylate elastomer. In other words, the adhesive layers are substantially devoid of other constituents such as plasticizers and the like. In one or more embodiments, the adhesive layers include greater than 80 wt%, in other embodiments greater than 85 wt%, in other embodiments greater than 90 wt %, in other embodiments greater than 95 wt %, and in other embodiments greater than 99 wt % of the cured polyacrylate elastomer, based upon the total weight of the adhesive body.

In one or more embodiments, the adhesive layers (e.g. polyacrylate hot-melt adhesive) are at least partially cured after being applied to the foamed carrier layer, as will be discussed in greater detail below. In one or more embodiments, the adhesive is cured to an extent that it is not thermally processable in the form it was prior to cure. In these or other embodiments, the cured adhesive is characterized by a cross-linked infinite polymer network. While at least partially cured, the adhesive layer of one or more embodiments is essentially free of curative residue such as sulfur or sulfur crosslinks and/or phenolic compounds or phenolic-residue crosslinks. In one or more embodiments, the adhesive body is characterized by a degree of cure that can be quantified based upon gel content. As the skilled person appreciates, gel content can be determined based upon the level of insoluble material following solvent extraction, which for purposes of this specification refers to solvent extraction using THF at its boiling point following four hours of extraction. These extraction techniques can be performed, for example, using Soxhlet extraction devices. In one or more embodiments, the gel content of the cured adhesive layer, based upon a THF extraction at the boiling point of THF after four hours, is greater than 20%, in other embodiments greater than 30%, in other embodiments greater than 40%, in other embodiments greater than 50%, in other embodiments greater than 55%, and in other embodiments greater than 60% by weight. In these or other embodiments, the gel content is less than 95%, in other embodiments less than 90%, in other embodiments less than 85%, and in other embodiments less than 80%. In one or more embodiments, the gel content is from about 20% to about 99%, in other embodiments from about 50% to about 95%, in other embodiments from about 55% to about 90%, and in other embodiments from about 60% to about 80% by weight.

In one or more embodiments, the adhesive body may be cured by employing one or more curing techniques including, but not limited to, UV curing, electron beam curing, and thermal curing. In particular embodiments, UV curing is employed, and in this respect, reference can be made to U.S. Publication Nos. 2016/0230392, 2017/0015083, 2017/0114543, 2019/0071872, 2019/0316359, and 2020/0299965.

In one or more embodiments, the cure characteristics of the adhesive layers are substantially homogeneous through the thickness of the adhesive body. In other words, the degree of cure at any given point along the thickness of the adhesive layers does not change appreciably, which refers to deviations that are less than would otherwise have an appreciable impact on the practice of the invention. In other embodiments, the degree of cure varies such that a cure continuum exists from one planar surface to the other planar surface through the thickness of the membrane. In these embodiments, the degree of cure at one planar surface is appreciably greater than the degree of cure at the opposed planar surface such that the adhesive characteristics will be appreciably different at the opposed surfaces to an extent that it will vary practice of the present invention as well as the results thereof.

### Non-Rigid Foam Layer

As indicated above, the double-sided adhesive subcomponent includes a non-rigid foam layer, which may also be referred to as a foam or foamed carrier layer. As is generally understood in the art, a foam is a cellular structure that may include an interconnected network of solid struts or plates (also referred to as matrix) that form the edges and faces of cells. These cellular structures may, in one or more embodiments, also be defined by a "relative density" that is less than 0.8, in other embodiments less than 0.5, and in other embodiments less than 0.3. As those skilled in the art will appreciate, "relative density" refers to the density of the cellular material divided by that of the solid from which the cell walls are made. As the relative density increases, the cell walls thicken, and the pore space shrinks such that at some point there is a transition from a cellular structure to one that is better defied as a solid containing isolated pores. In one or more embodiments, the foam is an open-cell foam. In other embodiments, the foam is a closed-cell foam.

In one or more embodiments, the matrix of the non-rigid foam layer may include a thermoplastic resin. Exemplary thermoplastic resins include, but are not limited to, polyolefin resins, polyvinylchloride resins, acrylic resins, and ethylene-vinyl acetate (EVA), and acrylonitrile-butadiene-styrene resin (ABS). In other embodiments, the matrix of the foamed carrier layer includes a thermoplastic elastomer. Exemplary thermoplastic elastomers include, but are not limited to, ethylene vinyl acetate, acrylic resins, and polymer blends including thermoplastic vulcanizates or EPDM, SBR and neoprene blends. In other embodiments, the matrix of the foamed carrier layer is a thermoset material. Exemplary thermoset materials include, but are not limited to, polyurethane, cured EPDM, cured blends of neoprene, EPDM, and SBR, cured blends of neoprene and EPDM, and crosslinked polyolefins. For example, the foam may include a polyethylene or polyethylene copolymer matrix that is e-beam crosslinked.

The non-rigid foam layer may be characterized by the density of the foam layer, which may be referred to as foam density, prior to being mated to the adhesive layers. As a skilled person appreciates, the density of the foam layer can be determined by ASTM D1056-20 for rubber foams and ASTM D3575-20 for polyolefin (thermoplastic) foams. In one or more embodiments, the density of the foamed carrier layer is greater than 0.8, in other embodiments greater than 1.0, and in other embodiments greater than 1.2 pounds per cubic foot (lbs/ft³). In these or other embodiments, the density of the foamed carrier layer is less than 10, in other embodiments less than 8, in other embodiments less than 6, in other embodiments less than 4, and in other embodiments less than 3 lbs/ft³. In one or more embodiments, the density of the foamed carrier layer may be from about 0.8 to about 10 lbs/ft³, in other embodiments from about 1.0 to about 8 lbs/ft³, in other embodiments from about 1.0 to about 6 lbs/ft³, in other embodiments from about 1.0 to about 4 lbs/ft³, and in other embodiments from about 1.2 to about 3 lbs/ft³.

The non-rigid foam layer may be characterized by the firmness of the foam, which is determined by ASTM D1056-20 prior to being mated to the adhesive layers. In one or more embodiments, the firmness of the foamed carrier layer may be greater than 0.1 (0.689 kPa), in other embodiments may be greater than 0.25 (1.72 kPa), in other embodiments may be greater than 0.5 (3.45 kPa), in other embodiments may be greater than 1 (6.89 kPa), in other embodiments greater than 3 (20.67 kPa), and in other embodiments greater than 5 psi (34.45 kPa). In these or other embodiments, the firmness of the foamed carrier layer may be less than 15 (103.35 kPa), in other embodiments less than 12 (82.68 kPa), in other embodiments less than 10 (68.90 kPa), in other embodiments less than 8 (55.12 kPa), in other embodiments less than 6 (41.34 kPa), and in other embodiments less than 4 psi (27.56 kPa). In one or more embodiments, the foamed carrier layer may have a firmness of from about 0.1 (0.689 kPa) to about 15 psi (103.35 kPa), 0.5 (3.45 kPa) to about 15 psi (103.35 kPa), in other embodiments from about 2 (13.78 kPa) to about 12 psi (82.68 kPa), in other embodiments from about 1 (6.89 kPa) to about 10 psi (68.90 kPa), in other embodiments from about 1 (6.89 kPa) to about 12 psi (68.90 kPa), and in other embodiments from about 3 (20.67 kPa) to about 10 psi (68.90 kPa).

The non-rigid foam layer may be characterized by tensile strength, in the machine direction, as determined prior to being mated to the adhesive layers. As a skilled person appreciates, machine direction tensile strength of the foamed carrier layer can be determined by ASTM D412-16. In one or more embodiments, the machine direction tensile strength of the foamed carrier layer is greater than 30 psi (206.70 kPa), in other embodiments greater than 40 psi (275.6 kPa), in other embodiments greater than 50 psi (344.50 kPa), and in other embodiments greater than 60 psi (413.4 kPa). In these or other embodiments, the machine direction tensile strength of the foamed carrier layer is less than 120 psi (826.8 kPa), in other embodiments less than 100 psi (689 kPa), in other embodiments less than 80 psi (551.2 kPa), and in other embodiments less than 50 psi (344.5 kPa). In one or more embodiments, the machine direction tensile strength of the foamed carrier layer may be from about 30 psi (206.7 kPa) to about 100 psi (689 kPa), in other embodiments from about 40 psi (275.6 kPa) to about 90 psi (620.1 kPa), and in other embodiments from about 50 psi (344.5 kPa) to about 80 psi (551.2 kPa).

The non-rigid foam layer may be characterized by its thickness prior to being mated to the adhesive layers. In one or more embodiments, the thickness of the foamed carrier layer is greater than 100 µm, in other embodiments greater than 250 µm, in other embodiments greater than 500 µm, in other embodiments greater than 1000 µm, in other embodiments greater than 1500 µm, in other embodiments greater than 2000 µm, and in other embodiments greater than 3500 µm. In these or other embodiments, the thickness of the foamed carrier layer is less than 10,000 µm, in other embodiments less than 8000 µm, in other embodiments less than 7000 µm, in other embodiments less than 5000 µm and in other embodiments less than 4000 µm. In one or more embodiments, the thickness of the foamed carrier layer may include from about 500 µm to about 10,000 µm, in other embodiments from about 1000 µm to about 7000 µm, and in other embodiments from about 1500 µm to about 5000 µm.

In one or more embodiments, the non-rigid foam layer may be characterized by a Shore A hardness, which may be determined by ASTM D2240-15, prior to being mated with the adhesive layers. In one or more embodiments, the foamed carrier layer is characterized by a Shore A hardness of less than 10, in other embodiments less than 7, in other embodiments less than 4, in other embodiments less than 2, and in other embodiments less than 1. In one or more embodiments, the foamed carrier layer is characterized by a Shore A hardness of from about 0 to about 10, in other embodiments from about 1 to about 7, and in other embodiments from about 2 to about 5.

In one or more embodiments, the non-rigid foam layer may be characterized by the deflection strength of the foam, which can be determined by ASTM D3575-20 at 25% deflection, prior to being mated to the adhesive layers. In one or more embodiments, the foamed carrier layer may be characterized by a deflection strength at 25% deflection of less than 15 (103.42 kPa), in other embodiments less than 12 (82.68 kPa), in other embodiments less than 10 (68.90 kPa), in other embodiments less than 8 (55.12 kPa), in other embodiments less than 6 (41.34 kPa), in other embodiments less than 4 psi (27.56 kPa), and in other embodiments less than 2 psi (13.78 kPa). In one or more embodiments, the foamed carrier layer may be characterized by a deflection strength at 25% deflection of from about 1 (6.89 kPa) to about 30 psi (206.84 kPa), in other embodiments from about 1 (6.89 kPa) to about 25 psi (172.37 kPa), in other embodiments from about 2 (13.78 kPa) to about 20 psi (137.90 kPa), and in other embodiments from about 3 (20.67 kPa) to about 15 psi (103.42 kPa).

### Release Member

In one or more embodiments, the release liners (e.g. liners 40 and 80), which may also be referred to as release members, may include polymeric films or extrudates. For example, the film or extrudate may include a single polymeric layer or may include two or more polymeric layers laminated or coextruded to one another. In other embodiments, the release liners may include woven or non-woven substrates (e.g. cellulosic substrates) having a polymeric film or coating applied thereon, which film or coating may be referred to as a polymeric layer. The polymeric layer may be a single layer or it may include multiple layers.

Suitable materials for forming a release liner that is a polymeric film or extrudate include polypropylene, polyester, high-density polyethylene, medium-density polyethylene, low-density polyethylene, polystyrene or high-impact polystyrene. Suitable materials for forming a polymeric layer on a cellulosic-based release liner include siloxane-based materials, butadiene-based materials, organic materials (e.g. styrene-butadiene rubber latex), as well as those polymeric materials employed to form a film or extrudate as described above. These polymeric materials may offer a number of advantageous properties including high moisture resistance, good resistance to temperature fluctuations during processing and storage, and increased tear and wrinkle resistance. The above referenced films and materials may be coated with a release agent, (e.g. - silicone).

In one or more embodiments, the release member is characterized by a thickness of from about 15 to about 80, in other embodiments from about 18 to about 75, and in other embodiments from about 20 to about 50 µm.

### Alternative Embodiments

### First Alternative Embodiment

An alternative embodiment of the present invention can be described with reference to Fig. 2, which shows composite construction board 50 including composite construction board subcomponent 60 and double-sided adhesive subcomponent 70. Construction board subcomponent 60 includes a first rigid foam body 62 and second rigid foam body 64. First rigid foam body 62 includes first planar surface 63 and second planar surface 65. An optional first facer 66 is disposed on a first planar surface 63 of first rigid foam body 62. An optional second facer 68 is disposed on a second planar surface 65 of first rigid foam body 22. Second rigid foam body 64 includes first planar surface 67 and second planar surface 69. In one or more embodiments, facer 68, described above with respect to first rigid foam body 62, is disposed on first planar surface 67 of second rigid foam body 64. An optional second facer 71 is disposed on a second planar surface 69 of second rigid foam body 64. As discussed above with respect to the other embodiments, the skilled person will appreciate that the facers may be integrally attached to the foam body by virtue of the foam being mated to the facers during formation of the foam.

Double-sided adhesive subcomponent 70 includes a non-rigid foam layer 72, a first pressure-sensitive adhesive layer 74 disposed on a first planar surface 75 of non-rigid foam layer 72, and a second pressure-sensitive adhesive layer 76 disposed on a second planar surface 77 of non-rigid foam layer 72. A release member 80 is removably attached to second pressure-sensitive layer 76 opposite non-rigid foam layer 72. In one or more embodiments, first pressure-sensitive adhesive layer 74 is disposed on the entire first planar surface 75 of foam layer 72. In one or more embodiments, second pressure-sensitive adhesive layer 76 disposed on the entire second planar surface 77 of foam layer 32. As shown in Fig. 2, double-sided adhesive subcomponent 70 is mated to facer 71 through first pressure-sensitive adhesive layer 74 where first facer 7 is present, or it will be appreciated that subcomponent 70 will be mated to planar surface 69 of foam body 64 where facer 71 is not present.

As generally shown in Fig. 2, first rigid foam body 62 is a high-density foam body (i.e. density of greater than 2.5 lbs./ft3 as described above) and second rigid foam body 64 is a low-density foam body (i.e. density of less than 2.5 lbs./ft3 as described above). In other embodiments, both first and second rigid foam bodies 62,64 may be high-density foam, or in other embodiments both first and second rigid foam bodies 62,64 may be low-density foam. In yet other embodiments, the rigid foam layers can be reversed from what is shown in Fig. 2 so that foam body 62 is a low-density foam body and foam body 64 is a high-density foam body.

### Second Alternative Embodiment

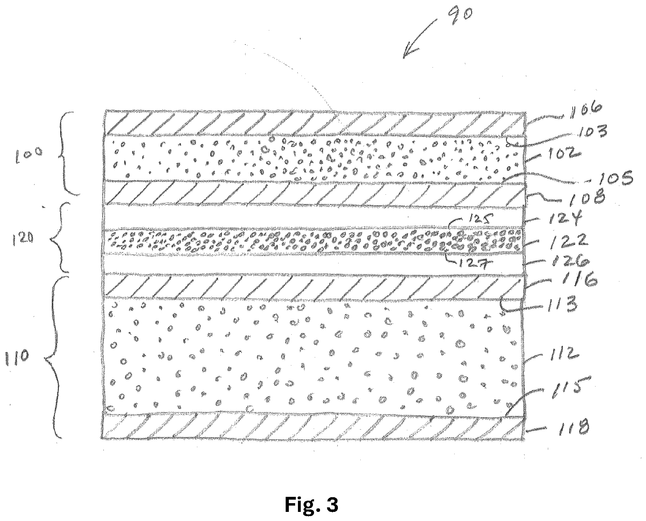

Another alternative embodiment of the present invention can be described with reference to Fig. 3, which shows composite construction board 90 including first construction board subcomponent 100, second construction board subcomponent 110, and double-sided adhesive subcomponent 120. First construction board subcomponent 100 includes a first rigid foam body 102 having first planar surface 103 and second planar surface 105. An optional first facer 106 is disposed on a first planar surface 103 of first rigid foam body 102. An optional second facer 108 is disposed on a second planar surface 105 of first rigid foam body 102. Second construction board subcomponent 110 includes a second rigid foam body 112 having first planar surface 113 and second planar surface 115. An optional first facer 116 is disposed on first planar surface 113 of second rigid foam body 112. An optional second facer 118 is disposed on second planar surface 115 of second rigid foam body 112. Double-sided adhesive subcomponent 120 includes a non-rigid foam layer 122, a first pressure-sensitive adhesive layer 124 disposed on a first planar surface 125 of non-rigid foam layer 112, and a second pressure-sensitive adhesive layer 126 disposed on a second planar surface 127 of non-rigid foam layer 122. In one or more embodiments, first pressure-sensitive adhesive layer 124 is disposed on the entire first planar surface 125 of non-rigid foam layer 122. In one or more embodiments, second pressure-sensitive adhesive layer 126 is disposed on the entire second planar surface 127 of non-rigid foam layer 122. As discussed above with respect to the other embodiments, the skilled person will appreciate that the facers may be integrally attached to the foam body by virtue of the foam being mated to the facers during formation of the foam. As shown in Fig. 3, double-sided adhesive subcomponent 120 is mated to second facer 108 of first construction board subcomponent 100 through first pressure-sensitive adhesive layer 124 where first facer 124 is present. As also shown, double-sided adhesive subcomponent 120 is mated to first facer 116 of second construction board subcomponent 110 through second pressure-sensitive adhesive layer 126 where first facer 116.

As generally shown in Fig. 3, rigid foam body 102 of first construction board subcomponent 100 is a high-density foam body (i.e. density of greater than 2.5 lbs./ft3 as described above) and rigid foam body 112 of second construction board subcomponent 110 is a low-density foam body (i.e. density of less than 2.5 lbs./ft3 as described above). In other embodiments, both first and second rigid foam bodies 102,112 may be high-density foam, or in other embodiments both first and second rigid foam bodies 102,112 may be low-density foam. In yet other embodiments, the rigid foam layers can be reversed from what is shown in Fig. 3 so that foam body 102 is a low-density foam body and foam body 112 is a high-density foam body.

### Third Alternative Embodiment

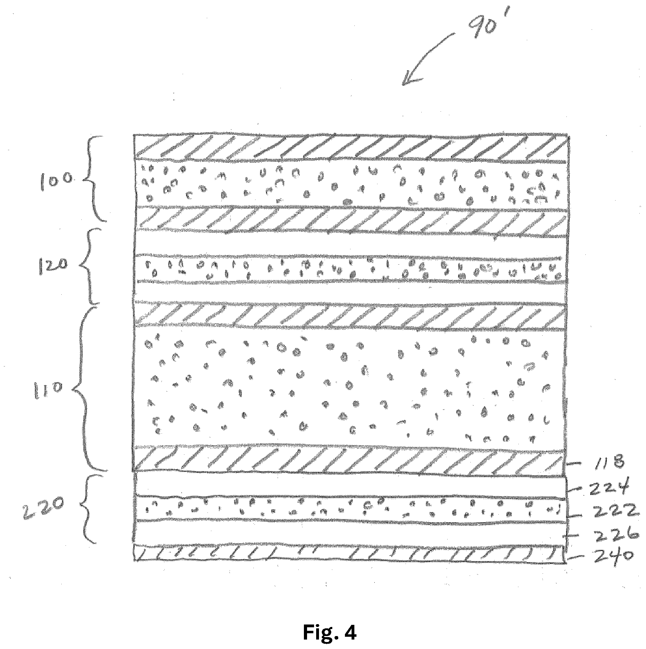

In one or more embodiments, composite 90 as shown in Fig. 3 may carry an additional double-sided adhesive component akin to that shown in Figs. 1 & 2. Namely, as shown in Fig. 4, composite 90' may include double-sided adhesive subcomponent 220 including first adhesive layer 224, second adhesive layer 226, and non-rigid foam layer 222. Subcomponent 220 is adhesively mated to construction board subcomponent 110 (e.g. first adhesive layer 224 is adhesively mated to facer 118 of construction board subcomponent 110). A release member 240 may optionally be removably secured to second adhesive layer 226.

### Fourth Alternative Embodiment

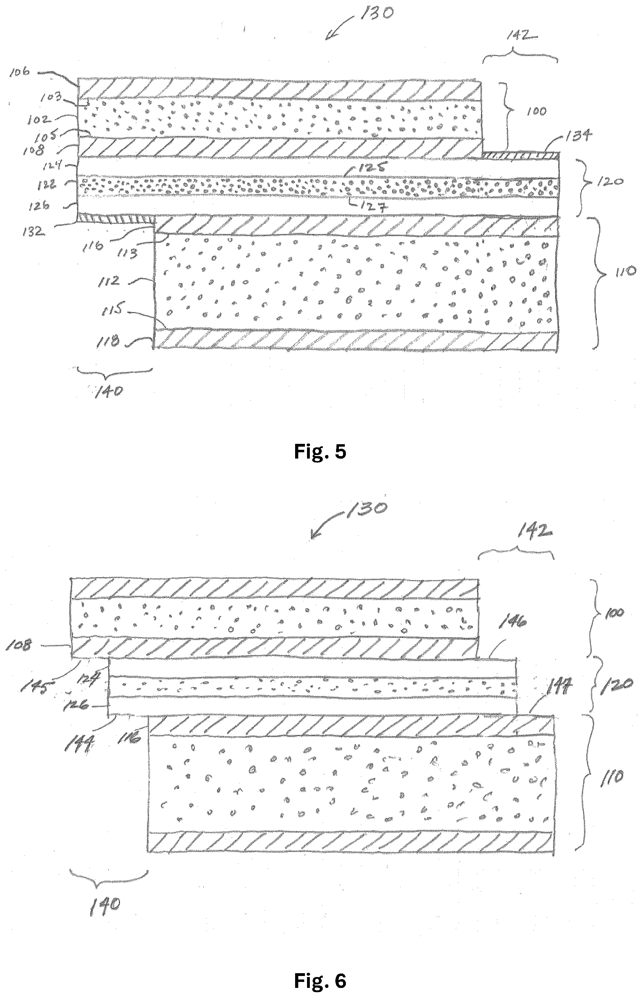

Yet another alternative embodiment of the present invention can be described with reference to Fig. 5, which shows composite construction board 130 including first construction board subcomponent 100, second construction board subcomponent 110, and double-sided adhesive subcomponent 120. First construction board subcomponent 100 includes a first rigid foam body 102 having first planar surface 103 and second planar surface 105. An optional first facer 106 is disposed on a first planar surface 103 of first rigid foam body 102. An optional second facer 108 is disposed on a second planar surface 105 of first rigid foam body 102. Second construction board subcomponent 110 includes a second rigid foam body 112 having first planar surface 113 and second planar surface 115. An optional first facer 116 is disposed on first planar surface 113 of second rigid foam body 112. An optional second facer 118 is disposed on second planar surface 115 of second rigid foam body 112. As discussed above with respect to the other embodiments, the skilled person will appreciate that the facers may be integrally attached to the foam body by virtue of the foam being mated to the facers during formation of the foam. Double-sided adhesive subcomponent 120 includes a non-rigid foam layer 122, a first pressure-sensitive adhesive layer 124 disposed on a first planar surface 125 of non-rigid foam layer 122, and a second pressure-sensitive adhesive layer 126 disposed on a second planar surface 127 of non-rigid foam layer 122. In one or more embodiments, first pressure-sensitive adhesive layer 124 is disposed on the entire first planar surface 125 of non-rigid foam layer 122. In one or more embodiments, second pressure-sensitive adhesive layer 126 is disposed on the entire second planar surface 127 of non-rigid foam layer 122. As shown in Fig. 4, double-sided adhesive subcomponent 120 is mated to second facer 108 of first construction board subcomponent 100 through first pressure-sensitive adhesive layer 124 where first facer 124 is present. And, double-sided adhesive subcomponent 120 is mated to first facer 116 of second construction board subcomponent 110 through second pressure-sensitive adhesive layer 126 where first facer 116.

As also shown in Fig. 5, first construction board subcomponent 100 is offset from second construction board subcomponent 110 to thereby create a shiplap configuration including first shiplap area 140 where a portion of second pressure-sensitive adhesive layer 126 is exposed, and a second shiplap area 142 where a portion of first pressure-sensitive adhesive layer 124 is exposed. An optional release member 132 may be removably attached to the exposed area of adhesive layer 126 in shiplap area 140, and an optional release member 134 may be removably attached to the exposed area of adhesive layer 124 in shiplap area 142.

As shown if Fig. 5, double-sided adhesive subcomponent 120 contacts first construction board subcomponent 100 (i.e. adhesive layer 124 contact facer 108) across the entirety of facer 108 (e.g. across the entire width and length of subcomponent 100). Likewise, as shown in Fig. 5, double-sided adhesive component 120 contacts second construction board subcomponent 110 (i.e. adhesive layer 126 contact facer 116) across the entirety of facer 116 (e.g. across the entire width and length of subcomponent 110). In other embodiments, as shown in Fig. 6, double-sided adhesive component 120 contacts the respective first and second construction board subcomponents 100, 110 to only partially the respective facers 108, 116 within the respective shiplap areas 140, 142. As a result, and with respect to shiplap area 140, double-sided adhesive subcomponent 120 is disposed relative to subcomponents 100, 120 to provide an exposed area of adhesive layer 126 within region 144 and an exposed area of facer 108 within region 145. Likewise, with respect to shiplap area 142, double-sided adhesive subcomponent 120 is disposed relative to subcomponents 100, 120 to provide an exposed area of adhesive layer 124 within region 146 and an exposed area of facer 116 within region 147. It will be appreciated that the amount of adhesive layer that is exposed can be readily adjusted, and it may be desirable to adjust the level of exposed adhesive layer to balance the ability to form a complete seal between adjacent boards when installed (e.g. partially overlap the exposed adhesive layers) and provide, for example, some exposed facer which could alleviate the need for a release member. That said, in one or more embodiments, a release member (not shown) may be disposed on the respective exposed adhesive layers with regions 144, 146.

As generally shown in Figs. 5 and 6, rigid foam body 102 of first construction board subcomponent 100 is a high-density foam body (i.e. density of greater than 2.5 lbs./ft3 as described above) and rigid foam body 112 of second construction board subcomponent 110 is a low-density foam body (i.e. density of less than 2.5 lbs./ft3 as described above). In other embodiments, both first and second rigid foam bodies 102,112 may be high-density foam, or in other embodiments both first and second rigid foam bodies 102,112 may be low-density foam. In yet other embodiments, the rigid foam layers can be reversed from what is shown in Figs. 5 and 6 so that foam body 102 is a low-density foam body and foam body 112 is a high-density foam body.

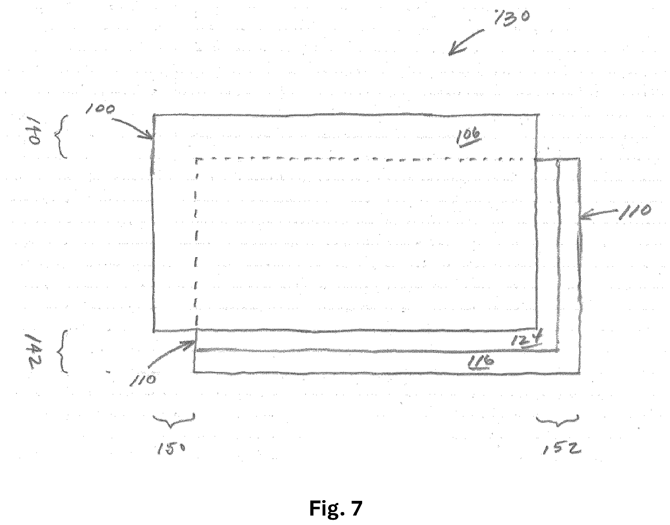

It will also be appreciated that in one or more embodiments the shiplap configuration shown in Figs. 5-6 may exist in two directions, as shown in Fig. 7. Specifically, as viewed from above, composite 130 includes construction board subcomponent 100, which has first facer 106 showing, is disposed over construction board subcomponent 110, which has first facer 116 showing, with adhesive subcomponent 110 disposed therebetween, which has first adhesive layer 124 showing. The offset of the two construction board subcomponents creates shiplap regions 140, 142 in the width of composite 130, and shiplap regions 150, 152 in the length of composite 130.

### Fifth Alternative Embodiment

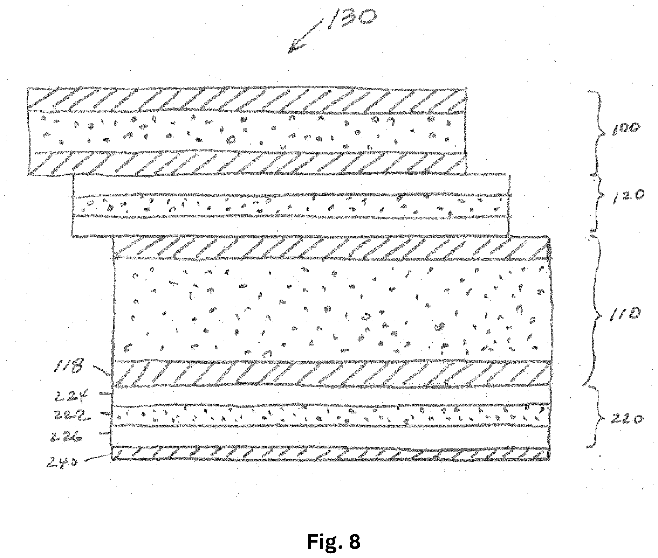

In one or more embodiments, composite 130 as shown in Figs. 5-7 may carry an additional double-sided adhesive component akin to that shown in Figs. 1 & 2. Namely, as shown in Fig. 8, composite 130' may include double-sided adhesive subcomponent 220 including first adhesive layer 224, second adhesive layer 226, and non-rigid foam layer 222. Subcomponent 220 is adhesively mated to construction board subcomponent 110 (e.g. first adhesive layer 224 is adhesively mated to facer 118 of construction board subcomponent 110). A release member 240 may optionally be removably secured to second adhesive layer 226.

### Method of Manufacturing Composite Construction Boards

In one or more embodiments, the composite construction boards of the present invention may be fabricated by mating a construction board to a double-sided adhesive component.

The construction board may be provided by preparing a construction board by using conventional techniques. The boards of one or more embodiments of this invention can be manufactured by using known techniques such as known techniques for producing polyurethane or polyisocyanurate insulation. Generally, the process includes mixing a first stream that includes an isocyanate-containing compound with a second stream that includes an isocyanate-reactive compound. Using conventional terminology, the first stream (i.e., the stream including an isocyanate-containing compound) may be referred to as an A-side stream, an A-side reactant stream, or simply an A stream. Likewise, the second stream (i.e., the stream including an isocyanate-reactive compound) may be referred to as a B-side stream, B-side reactant stream, or simply B stream.

The mixture of the A-side and the B-side stream is then deposited on to a facer that, within a continuous process, is continuously conveyed below the mix head in which the A-side and B-side streams are mixed. After the mixture is deposited on to the first facer, a second facer material is then applied over the mixture, which is in the form of a rising or expanding foam at this point. In other words, the mixture is sandwiched between two facer materials that are being continuously conveyed. This sandwiched structure is then typically conveyed into a laminator where the polyurethane/polyisocyanurate reaction is accelerated through the application of heat. Processes for the manufacture of polyurethane or polyisocyanurate insulation boards are known in the art as described in U.S. Patent Nos. 7,838,568; 7,612,120; 7,387,753; 6,117,375; 6,044,604; 5,891,563; 5,573,092; and U.S. Publication Nos. 2004/0109983, 2003/0082365, 2003/0153656, 2003/0032351, and 2002/0013379, which are incorporated herein by reference.

In those embodiments that include a composite board with multiple foam layers, such as those described with reference to Fig. 2, the skilled person appreciates that the composite boards be manufactured by employing known techniques including those techniques that include forming a first foam layer on a first facer, mating a second facer to the developing foam, and then forming a second foam layer on the second facer, followed by mating a third facer to the second foam layer. These techniques are described, for example, in U.S. Publication No. 2014/0011008, which is incorporated herein by reference.

The double-sided adhesive component, which may also be referred to as an adhesive sheet, may be provided as follows. As suggested above, the double-sided adhesive component includes a first pressure-sensitive adhesive layer, a second pressure-sensitive adhesive layer, and a non-rigid foam layer, which may also be referred to as a foam carrier layer. Prior to being mated to the construction board, the adhesive sheet may be in the form of a roll with at least one release member protecting the adhesive layers. The skilled person will appreciate that the pressure-sensitive layers and the foam carrier layer will have the characteristics outlined above with respect to the composite. Useful double-sided adhesive components are described in co-pending PCT/EP2024/058094 which is incorporated herein by reference.

In one or more embodiments, the adhesive layers may be cured by employing one or more curing techniques including, but not limited to, UV curing, electron beam curing, and thermal curing. In particular embodiments, UV curing is employed, and in this respect, reference can be made to U.S. Publication Nos. 2016/0230392, 2017/0015083, 2017/0114543, 2019/0071872, 2019/0316359, and 2020/0299965.

In one or more embodiments, the double-sided adhesive sheet has a thickness of greater than 25, in other embodiments greater than 50, in other embodiments greater than 75, and in other embodiments greater than 100 µm. In these or other embodiments, the double-sided adhesive sheet may have a thickness of less than 890, in other embodiments less than 760, in other embodiments less than 635, in other embodiments less than 508, and in other embodiments less than 380 µm. In one or more embodiments, the double-sided adhesive sheet has a thickness of from about 25 to about 890 µm, in other embodiments from about 50 to about 760 µm, in other embodiments from about 75 to about 635 µm, and in other embodiments from about 100 to about 508 µm.

In one or more embodiments, the double-sided adhesive sheet has a width of greater than 30 cm, in other embodiments greater than 45 cm, in other embodiments greater than 60 cm, and in other embodiments greater than 75 cm. In these or other embodiments, the double-sided adhesive sheet may have a width of less than 15 m, in other embodiments less than 12 m, in other embodiments less than 9 m, and in other embodiments less than 6 m. In one or more embodiments, the double-sided adhesive sheet has a width of from about 30 cm to about 15 m, in other embodiments from about 45 cm to about 12 m, in other embodiments from about 60 cm to about 9 m, and in other embodiments from about 75 cm to about 6 m.

In one or more embodiments, the double-sided adhesive sheet is provided in the form of a roll, and therefore the double-sided adhesive sheet may have an extended length. In one or more embodiments, the double-sided adhesive sheet has a length of greater than 30 cm, in other embodiments greater than 6 m, in other embodiments greater than 10 m, and in other embodiments greater than 50 m. In these or other embodiments, the double-sided adhesive sheet may have a length of less than 900 m, in other embodiments less than 750 m, in other embodiments less than 600 m, in other embodiments less than 300 m, and in other embodiments less than 100 m. In one or more embodiments, the adhesive body has a length of from about 30 cm to about 900 m, in other embodiments from about 6 m to about 750 m, in other embodiments from about 10 m to about 600 m, and in other embodiments from about 20 m to about 300 m.

### Characteristics of Double-Sided Adhesive Sheet

In one or more embodiments, the double-sided adhesive sheet may be characterized by tensile strength measured perpendicular to the planar surface of the foamed layer, which may also be referred to as the Z-direction tensile strength. The skilled person appreciates that Z-direction tensile strength of the foamed carrier layer can be determined by employing an adaptation of ASTM C209, wherein the adaptation included employing a 2 inch x 2 inch metal plates (affixed to Instron operating pursuant to the ASTM C209 specification) and adhere each of the respective sides of a 2 inch x 2 inch composite (i.e. double-sided sheet) directly to the respective plates. In one or more embodiments, the foamed carrier layer is characterized by a Z-direction tensile strength of greater than 4 psi (27.58 kPa), in other embodiments greater than 5 psi (34.47 kPa), in other embodiments greater than 6 psi (41.37 kPa), in other embodiments greater than 7 psi (48.26 kPa), in other embodiments greater than 10 psi (68.95 kPa), in other embodiments greater than 12 psi (82.74 kPa), in other embodiments greater than 15 (103.42 kPa), and in other embodiments greater than 18 psi (124.11 kPa). In these or other embodiments, the foamed carrier layer is characterized by a Z-direction tensile strength of from about 3 psi (20.68 kPa) to about 45 psi (310.26 kPa), in other embodiments from about 10 psi (68.95 kPa) to about 40 psi (275.79 kPa), and in other embodiments from about 15 psi (103.42 kPa) to about 35 psi (241.32 kPa).

In one or more embodiments, the double-sided adhesive sheet may be characterized by its permeability (or lack thereof). The skilled person appreciates that the permeability of the foamed carrier layer can be determined by ASTM E96/E96M-23. In one or more embodiments, the double-sided adhesive sheet is non-permeable, which refers to a composite characterized by less than 0.1 perms pursuant to ASTM E96/E96M-23. In other embodiments, the double-sided adhesive sheet is semi-impermeable, which refers to a composite characterized by 0.1 to 1.0 perms pursuant to ASTM E96/E96M-23. In other embodiments, the double-sided adhesive sheet is semi-permeable, which refers to a composite characterized by 1.0 to 10 perms pursuant to ASTM E96-/E96M-23.

In one or more embodiments, the double-sided adhesive sheet may be characterized by its bond strength to stainless steel panel, which can be determined by the dead load shear test provided in Pressure Sensitive Tape Council (PSTC) 107, Method A (revised May 2007), at 23 °C +/-1 °C. For purposes of this specification, Method A is followed except that polyester film is adhered to the exposed surfaces of the test specimen to ensure that failure occurs at the interface of the adhesive and the stainless steel plate. The sample is aged for one minute after application of the polyester film. In one or more embodiments, double-sided adhesive sheet is characterized by a dead load shear at 22 °C of at least 60 minutes, in other embodiments at least 120 minutes, in other embodiments at least 180 minutes, and in other embodiments at least 240 minutes.

In one or more embodiments, with the construction board and the double-side adhesive component provided, the next step of the process includes mating the double-sided adhesive component to the construction board. This can be accomplished by employing standard techniques. For example, where the double-sided adhesive component is provided in the form of a roll with a single layer of release liner, the adhesive component can be unwound to expose a layer of adhesive that can be mated to the construction board (e.g. to a facer of the construction board) while leaving the release line in place on the opposite pressure-sensitive layer.

In those embodiments where the double-sided adhesive component secures two construction boards together, for example in the embodiments shown in Figs. 3 and 4, the process for fabricating the construction board may include mating the double-side adhesive component to a first board, removing the release liner, and then mating the opposite layer of pressure-sensitive adhesive to the second board.

### Method of Assembling Roof System

The composite construction boards of one or more embodiments of the present invention can advantageously be adhered to a roof structure, such as a roof deck, by using convenient peel-and-stick installation techniques. In one or more embodiments, the construction boards can be adhered without the use of adhesives or primers, which may include volatile organic compounds.

According to one or more embodiments, the composite construction boards can be pre-fabricated a location other than where the composite construction boards are installed. For example, the composite construction boards can be prepared a fabrication facility including the facility where the foam construction boards are fabricated. The composite construction boards can then be bundled and shipped to the location where they are ultimately installed on a roof structure.

In one or more embodiments, the roof may be assembled by providing a composite construction board of this invention, positioning the composite construction board at location at or proximate to where the composite construction board will be installed, removing the release member to expose layer of pressure-sensitive adhesive, and then securing the composite construction board to the roof surface.

### Industrial Applicability

Practice of the present invention is not limited by the type of roof deck to which the construction boards of the present invention may be secured. For example, the roof decks may include conventional roof decks, such as those constructed of wood, steel, and/or concrete.

In one or more embodiments, roof systems can be constructed by using the composite boards of the present invention. In one or more embodiments, this will include application of a membrane over the composite construction board; i.e. after at least one layer of construction boards is installed. Practice of the present invention is not necessarily limited by the selection of a particular roofing membrane. As is known in the art, numerous roofing membranes have been proposed in the art and several are used commercially including thermoset and thermoplastic roofing membranes. Commercially available thermoplastic roofing membranes may include polyvinyl chloride, or polyolefin copolymers. For example, thermoplastic olefin (TPO) membranes are available under the trade names UltraPly^{™}, and ReflexEON^{™} (ELEVATE) and SureWeld^{™} (Carlisle SynTec). Commercially available thermoset roofing membranes may include elastomeric copolymers such as ethylene-propylene-diene copolymer (EPDM) rubber and functionalized olefins such as chlorosulfonated polyethylene (CSPE). For example, EPDM membranes are available under the trade name RubberGard^{™}, RubberGard Platinum^{™}, RubberGard EcoWhite^{™}, and RubberGard MAX^{™} (ELEVATE). Useful EPDM membrane is disclosed in, for example, U.S. Patent Nos 7,175,732; 6,502,360; 6,120,869; 5,849,133; 5,389,715; 4,810,565; 4,778,852; 4,732,925; and 4,657,958, which are incorporated herein by reference. EPDM membranes are commercially available from a number of sources; examples include those available under the tradenames RubberGard (ELEVATE) and SURE-SEAL (Carlisle SynTec).

As indicated above, practice of the present invention provides a fully-adhered system wherein the insulation boards and/or cover boards are fully adhered within the roofing system (e.g. they may be partially or fully adhered to the substrate). In one or more embodiments, these fully-adhered systems have improved resistance to wind uplift forces, and improved ease of application and installation. Also, 4'x8' insulation boards can advantageously be installed without release of volatile organic compounds to the atmosphere. Moreover, the adhesion of the board to the underlying substrate is technologically advantageous. In one or more embodiments, the adhesion between the construction board and the underlying substrate may be characterized by a Factory Mutual 4450 wind uplift test or a Underwriters Laboratories UL580 wind uplift test, with values in excess of 90 pounds per square foot.

In one or more embodiments, the construction boards are insulation boards that meet the requirements of ASTM C1289. In other embodiments, the construction boards are cover boards that meet the specifications of ASTM C1289.

Various modifications and alterations that do not depart from the scope and spirit of this invention will become apparent to those skilled in the art. This invention is not to be duly limited to the illustrative embodiments set forth herein.

## Claims

1. A composite construction board comprising:
(a) construction board subcomponent; and
(b) double-sided adhesive subcomponent.

2. The composite construction board of claim 1, further comprising a release member.

3. The composite construction board of any of the preceding claims, where said double-sided adhesive subcomponent includes a non-rigid foam layer and first and second pressure-sensitive adhesive layers disposed on opposite sides of said non-rigid foam layer.

4. The composite construction board of claim 3, where said first and second pressure-sensitive adhesive layers include a cured polyacrylate.

5. The composite construction board of any of claims 3 and 4, where said first and second pressure-sensitive adhesive layers have a thickness of from about 51 to about 381 µm.

6. The composite construction board of any of the preceding claims, where the construction board subcomponent includes first and second polyisocyanurate foam layers.

7. The composite construction board of claim 6, where the first polyisocyanurate foam layer has a density of less than 48.1 kg/m³ (3.0 lbs/ft³) and/or the second polyisocyanurate foam layer has a density of greater than 48.1 kg/m³ (3.0 lbs/ft³).

8. The composite construction board of any of claims 3 to 7, where the non-rigid foam layer is a foamed thermoplastic resin, preferably a foamed polyolefin or a foamed acrylic resin.

9. The composite construction board of any of claims 3 to 7, where the non-rigid foam layer is a foamed elastomer.

10. The composite construction board of any of claims 3 to 7, where non-rigid foam layer is a foamed ethylene vinyl acetate resin or a foamed polyurethane.

11. The composite construction board of any of claims 3 to 10, where the non-rigid foam layer has a thickness of about 500 to about 10,000 µm.

12. The composite construction board of any of claims 3 to 11, where the non-rigid foam layer is a closed cell foam.

13. The composite construction board of any of claims 3 to 12, where the non-rigid foam layer has a density of from about 12.8 to about 160.2 kg/m³ (about 0.8 to about 10 lbs/ft³) and/or where the non-rigid foam layer prior to sandwiching between the pressure-sensitive adhesive layers, has a tensile strength of about 2.07 to about 6.89 bar (about 30 to about 100 psi).

14. A roof system including the composite construction board of any of the preceding claims.

15. A method of installing the composite construction board of any of claims 3 to 13 on a roof, the method comprising positioning the composite construction board on a roof surface, removing the release liner; and securing the composite construction board to the roof through one of said pressure-sensitive adhesive layers.
